# EUROPEAN PATENT SPECIFICATION

(11) **EP 1 571 189 B1**
(45) Date of publication and mention of the grant of the patent: **13.08.2008**
(21) Application number: 05004445.2
(22) Date of filing: 01.03.2005
(51) Int. Cl.: C09D 167/00, C08G 63/20, C08G 63/91, C08G 63/78

(54) **A method of preparing the polyester resin, and a coating composition thereof**
Verfahren zur Herstellung vom Polyesterharz und Beschichtungszusammentsetzung aus diesem Harz
Méthode pour la préparation de résine polyester, et composition d'enduction à base de cette résine

(30) Priority: 04.03.2004 US 793529
(43) Date of publication of application: 07.09.2005
(73) Proprietor: BASF CORPORATION, Southfield, MI 48034-2442 (US)
(72) Inventor: Ramesh, Swaminathan, Canton Michigan 48187 (US); Green, Marvin L., Brighton Michigan 48116 (US)
(74) Representative: Leifert & Steffan

(56) References cited:
- WO-A-89/05322
- WO-A-93/18079
- WO-A-02/068553
- WO-A-03/027186
- WO-A-03/089522
- WO-A-20/04011566
- US-A1- 2002 082 359
- US-B1- 6 515 192

## Description

### FIELD OF THE INVENTION

The present invention generally relates to a method of preparing a polyester resin, and a coating composition that incorporates the polyester resin and a cross-linking agent. More specifically, the present invention relates to a method for preparing a hyper-branched, polyester resin that is prepared by increasing a temperature of intermediate compounds formed during the preparation method such that the intermediate compound undergoes self condensation to form the polyester resin.

### BACKGROUND OF THE INVENTION

Polyester resins and their use in a wide variety of coating applications are known in the art. In a coating composition, polyester resins, along with a suitable cross-linking agent, generally produce a film having relatively good film properties, such as acceptable intercoat adhesion and resistance to scratch and mar.

More recently, star polyester resins have been used to generate coating compositions that require less solvent for processing and for application purposes, thereby lowering overall emissions of volatile organic compounds (VOCs). Star polyester resins are branched polyester resins and are generally used because they offer higher molecular weights and higher functionalities with low polydispersities, yet they exhibit comparatively low viscosity and, therefore, require less solvent for reduction. When in a complete coating composition, the high molecular weight of the star polyester resins results in a film having the good film properties referenced above.

More specifically, the star polyester resins that have been used to date are homogenous, compact resins that have a narrow polydispersity with the polydispersity typically only ranging from 1.0-1.2. Furthermore, the star polyester resins used to date are not hyper-branched. Consequently, the range of the polydispersity is limited and the star polyester resins of the prior art have limited cross-linking capability because, without hyper-branching, the overall number of cross-linking sites available on the star polyester resin is limited as compared to a star polyester resin, formed from similar reactants, that has been hyper-branched. Due to the limited polydispersity and to the limited cross-linking capability, the films produced by coating compositions that incorporate the conventional star polyester resins are particularly susceptible to inadequate chip performance. That is, although the films may exhibit acceptable intercoat adhesion and resistance to scratch and mar, these films have, to date, performed unsatisfactorily for resistance to chipping. It is also known that these conventional films are often particularly susceptible to acid etch.

Due to the inadequacies associated with the star polyester resins of the prior art, especially the inadequacies related to poor chip performance, it is desirable to provide a new and unique method for preparing a polyester resin having a higher and more diverse range of polydispersity while maintaining similar viscosity. It would also be desirable to provide a straightforward method by which to prepare the polyester resin.

### SUMMARY OF THE INVENTION AND ADVANTAGES

A method of preparing the polyester resin, and a coating composition that includes the polyester resin are disclosed. Generally, the polyester resin is the reaction product of a first compound and a carboxylic acid anhydride. A plurality of the first compound and a plurality of the carboxylic acid anhydride are present. The first compound includes hydroxyl groups. More specifically, the plurality of the carboxylic acid anhydride is reacted with the hydroxyl groups of the first compounds. This reaction forms a plurality of first intermediate compounds that have at least one hydroxyl group and carboxylic acid groups.

Once the first intermediate compounds are formed, a temperature of these intermediate compounds is raised until the hydroxyl group of one first intermediate compound condenses with one of the carboxylic acid groups of another first intermediate compound. This condensing, or condensation, forms the polyester resin having an ester linkage and carboxylic acid groups. Thus, the polyester resin of the present invention is derived from the ester linkage established between two first intermediate compounds. A second compound having at least one epoxy group and also a carbamate compound may be subsequently reacted with the polyester resin. A coating composition according to the present invention includes the polyester resin and also incorporates a cross-linking agent that is reactive with the polyester resin.

The condensation that is established between two first compounds upon the increase in the temperature causes a controlled hyper-branching that results in a polyester resin that has a higher and more diverse range of polydispersity as compared to the polyester resins of the prior art, including conventional star polyester resins. Furthermore, the hyper-branching in the present method is controlled so that a dramatic rise in viscosity is not realized and the polyester resin does not gel. With the viscosity maintained, coating compositions that incorporate this polyester resin have a comparable solids and VOC content.

Due to this higher and more diverse polydispersity, films that are produced from coating compositions that incorporate the polyester resin prepared by the method of the present invention exhibit superior chip performance as compared to films produced from conventional coating compositions, i.e., coating compositions that incorporate various polyester resins of the prior art. The films produced according to this invention also exhibit acceptable intercoat adhesion and resistance to scratch and mar. Surprisingly, these films exhibit an overall superior appearance, as evidenced by higher gloss values, and also exhibit increased resistance to the acid etch, when compared to the films produced from the conventional coating compositions.

### DETAILED DESCRIPTION OF THE INVENTION

The polyester resin prepared by the method of the present invention, also referred to in the art as a star polyester or a star polyester polymer, is used in a coating composition, in conjunction with a suitable cross-linking agent, to produce a film for coating a substrate, such as the body panels of a vehicle and the like. The polyester resin is hyper-branched. The coating composition of the present invention, which is described additionally below, is most preferably a solventborne clearcoat coating composition applied over a high solids solventborne basecoat coating composition.

Generally, the polyester resin is the reaction product of a first compound and a carboxylic acid anhydride. The first compound has hydroxyl groups, and there is a plurality of the first compound and a plurality of the carboxylic acid anhydride present to prepare to the polyester resin. The terminology 'plurality' of the first compound and the terminology 'plurality' of the carboxylic acid anhydride as used herein is simply intended to denote that there must be sufficient molar amounts of both the first compound and the carboxylic acid anhydride present to form the plurality of first intermediate compounds. This terminology is not intended to require that there be more than one particular first compound or more than one particular carboxylic acid anhydride.

The carboxylic acid anhydrides are reacted with the hydroxyl groups of the first compounds to form a plurality of first intermediate compounds having at least one hydroxyl group and carboxylic acid groups. After this reaction, the polyester resin is derived from the first intermediate compounds by condensing the hydroxyl group of one of the first intermediate compounds with one of the carboxylic acid groups of another of the first intermediate compounds.

The method of preparing the polyester resin includes the steps of providing the plurality of the first compound, reacting the hydroxyl groups of the first compounds with the plurality of the carboxylic acid anhydride to form the first intermediate compounds, and increasing a temperature of the first intermediate compounds until the hydroxyl group of one first intermediate compound condenses with one of the carboxylic acid groups of another first intermediate compound to form the polyester resin. As will become evident from the following description, the increased temperature, and the condensing that results from the increase in temperature, achieves a hyper-branched, polyester resin in a controlled manner. Of course, heating can continue so that the temperature and the duration of heating are increased beyond the point at which the condensing occurs. All that is required by the terminology 'until' is that the temperature is increased to the point at which some amount of condensing occurs. However, as the temperature and the duration of heating are increased, one must ensure that the polyester resin that is formed is not effectively 'gelled' and not workable. The condensing occurs long before gellation results. As will become more evident from the description below, the polyester resin has an ester linkage and carboxylic acid groups. The method steps of the subject invention are preferably conducted at temperatures between 50°C and 200°C, more preferably at temperatures between 120°C and 180°C. This method will be described in further detail below.

To prepare the polyester resin, the first compound is selected to maximize the number of hydroxyl groups, i.e., the hydroxyl functionality, in the first compound while establishing a foundation for the hyper-branched organic structure of the polyester resin. It is not required that the first compound be branched. Linear polyols such as relatively non-complex diols and triols may be suitable as the first compound. One example of such a first compound is ethylene glycol.

Although branching is not required, it is most preferred that the first compound is highly branched. Thus, it is most preferred that the first compound is a branched polyol. Branched polyols are also described in the art as branched compounds that have a plurality of hydroxyl groups. The hydroxyl groups can be primary, secondary, and tertiary hydroxyl groups. The branched polyol functions as the core of the polyester resin that establishes a foundation for the polyester resin.

Preferably, the first compound is selected from the group of glycerol (glycerin), propylene glycol, erythritol, pentaerythritol, dipentaerythritol, trimethylolethane, trimethylolpropane, dulcitol, threitol, and combinations thereof. Propylene glycol provides two hydroxyl groups, glycerol, trimethylolethane and trimethylolpropane each provide three hydroxyl groups, erythritol, pentaerythritol, and threitol each provide four hydroxyl groups, and dipentaerythritol and dulcitol each provide six hydroxyl groups. Despite these preferred compounds, a wide variety of other first compounds may be used including, but not limited to, ditrimethylolpropane, tetrakis (2-hydroxyethyl) methane, diglycerol, xylitol, glucitol, sucrose, and other alcohols, sugars, and acids that provide a plurality of hydroxyl groups.

It is to be understood that branched polyols, especially the more complex branched polyols, are frequently referred to as star polyols, and these star polyols are frequently described in different manners. For instance, star polyols can be described as a monomeric polyol containing four or more primary or secondary hydroxyl groups. Alternatively, star polyols can be described as a macromolecule containing a single branch point from which linear chains, or arms, emanate. Star polyols can also be described as a macromolecule containing a constitutional unit from which more than two chains, or arms, emanate.

Preferably, the first compound is present in an amount of from 10 to 60, more preferably from 25 to 45, parts by weight based on 100 parts by weight of the polyester composition, prior to the condensing reaction, i.e., on a basis where only the first compound and the carboxylic acid anhydride are considered. When the polyester composition is also derived from, or modified with, a second compound and a carbamate compound in addition to the first compound and the carboxylic acid anhydride, the first compound is present in an amount of from 5 to 15, more preferably from 7 to 13, parts by weight based on 100 parts by weight of the polyester composition. With this data, the basis for the polyester composition is the first compound, the carboxylic acid anhydride, the second compound, and the carbamate compound. Modification with the second compound and with the carbamate compound is described additionally below.

In the preferred embodiment of the subject invention, the first compound is pentaerythritol. For descriptive purposes, a chemical representation of pentaerythritol is disclosed below.

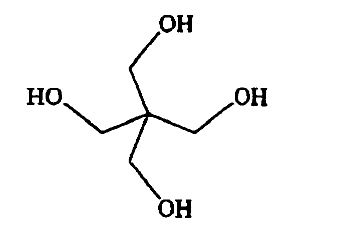

The carboxylic acid anhydride that is reacted with the hydroxyl groups of the first compound is selected to maximize the number of carboxylic acid groups, i.e., the acid functionality, that can be formed in the first intermediate compound and also to contribute to the hyper-branched organic structure of the polyester resin. The carboxylic acid anhydride may be either an aromatic or non-aromatic cyclic anhydride. The carboxylic acid anhydride is preferably selected from, but not limited to, the group of maleic anhydride, hexahydrophthalic anhydride, methyl-hexahydrophthalic anhydride, tetrahydrophthalic anhydride, phthalic anhydride, succinic anhydride, dodecenylsuccinic anhydride, trimellitic anhydride, and mixtures thereof. In the preferred embodiment of the subject invention, the carboxylic acid anhydride comprises hexahydrophthalic anhydride. For descriptive purposes, a chemical representation of hexahydrophthalic anhydride is disclosed below.

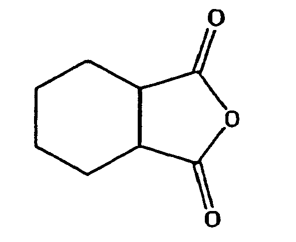

As shown above, the hexahydrophthalic anhydride provides an acid functionality whereby one carboxylic acid group can be formed into the first intermediate compound per mole of the carboxylic acid anhydride introduced.

The carboxylic acid anhydride is present in the polyester resin in an amount from 20 to 90, preferably from 40 to 70, parts by weight based on 100 parts by weight of the polyester resin, prior to the condensing reaction, i.e., on a basis where only the first compound and the carboxylic acid anhydride are considered. When the polyester composition is also derived from, or modified with, the second compound and the carbamate compound in addition to the first compound and the carboxylic acid anhydride, the carboxylic acid anhydride is present in an amount of from 20 to 50, more preferably from 25 to 35, parts by weight based on 100 parts by weight of the polyester composition. With this data, the basis for the polyester composition is the first compound, the carboxylic acid anhydride, the second compound, and the carbamate compound.

Also, the molar ratio of the carboxylic acid anhydride to the first compound present in the polyester resin is preferably from 2 : 1 to 20 : 1. More specifically, in more preferred embodiments of the subject invention, the molar ratio of the carboxylic acid anhydride, such as hexahydrophthalic anhydride, that is reacted with the first compound, such as pentaerythritol, is 3 : 1. That is, three moles of hexahydrophthalic anhydride are reacted with one mole of pentaerythritol to form the first intermediate compound.

Generally, the number of moles of the carboxylic acid anhydride that are reacted are one less than the number of hydroxyl groups provided by the whatever first compound that is selected such that at least one hydroxyl group of the first compound remains unreacted in the first intermediate compound. For example, whenever the first compound is erythritol, pentaerythritol, threitol, or any other compound that provides four hydroxyl groups, it is preferred that three moles of the carboxylic acid anhydride, no matter what it is, are reacted with one mole of the first compound to form the first intermediate.

For descriptive purposes, a chemical representation of the first intermediate compound formed by the reaction of one mole pentaerythritol and three moles of hexahydrophthalic anhydride is disclosed below.

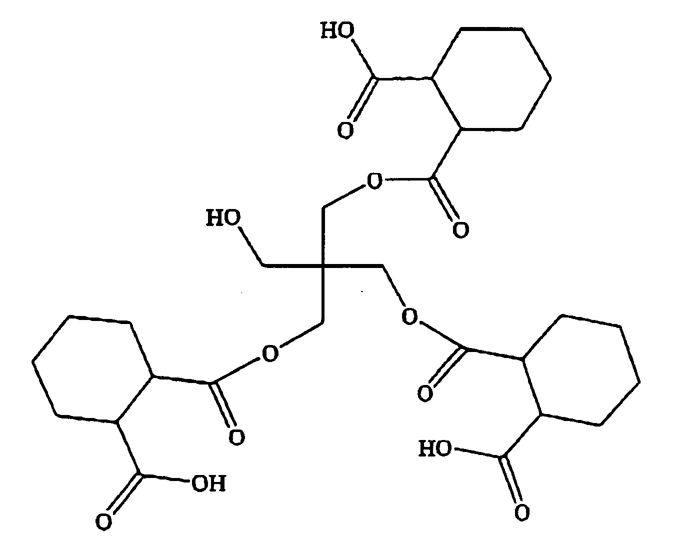

As shown above, the first intermediate compound has at least one hydroxyl group and a plurality of carboxylic acid groups. Further, the first intermediate compound that is formed with the reactants of the preferred embodiment is a tri-carboxylic acid compound, i.e., a compound including three carboxylic acid groups or an acid functionality of three. The three carboxylic acid groups of the first intermediate compound are formed when the anhydride rings of the three moles of hexahydrophthalic anhydride open forming ester linkages with the pentaerythritol, and the hydrogen atoms from the three hydroxyl groups of the pentaerythritol react with the oxygen atoms originally from the anhydride rings of the three moles of hexahydrophthalic anhydride thereby forming the tri-carboxylic acid intermediate compound according to the preferred embodiment. As stated above, the first intermediate compound of the preferred embodiment has an acid functionality of three. Of course, it is to be understood that the acid functionality can decrease or increase depending upon the selection of the particular first compound and of the particular carboxylic acid anhydride, and upon the equivalent weight ratios between the first compound and the carboxylic anhydride.

The chemical representation of the first intermediate compound disclosed above is merely illustrative of the subject invention. The intermediate compound disclosed above has a four-branch organic structure originally derived from the organic structure of the pentaerythritol. It is to be understood that if an alternative first compound is selected, such as dipentaerythritol which, as discussed above, provides six hydroxyl groups, then the first intermediate compound would have a six-branch organic structure derived from the structure of the dipentaerythritol. Of course, five moles of hexahydrophthalic anhydride then would be selected to react with the hydroxyl groups of the dipentaerythritol.

Furthermore, using the preferred molar ratio of 3 : 1 as an example, it is to be understood that the above chemical representation for the first intermediate compound is theoretical and that there will, of course, be a variety of differing first intermediate compounds present in any reaction mixture. In the context of the preferred embodiment, it is estimated that the first intermediate compounds will have the following ratios of hexahydrophthalic anhydride (HHPA) to pentaerythritol (PE):

| **HHPA: PE** | **% in Reaction** |
|---|---|
| 0 : 1 | 0.4 |
| 1 : 1 | 4.7 |
| 2 : 1 | 21.1 |
| 3 : 1 | 42.2 |
| 4 : 1 | 31.6 |
| *Total:* | 100.0 |

Once the first intermediate compounds are formed, the temperature of the first intermediate compounds is increased until the hydroxyl group of one first intermediate compound condenses with one of the carboxylic acid groups of another first intermediate compound to form the polyester resin. This increase in temperature results in hyper-branching for the polyester composition. Prior to the condensing, the temperature is generally < 140°C. To initiate the condensing between the first intermediate compounds, the temperature is increased to 140-190°C, more preferably to 150-180°C, such that the hydroxyl group of one first intermediate compound condenses with one of the carboxylic acid groups of another first intermediate compound to form the polyester resin, with elimination of water. The amount of water that is eliminated can be collected and measured to indicate the progress of the reaction. Generally, once the temperature reaches 150°C or above, the temperature of the first intermediate compounds is held at this temperature or greater for a certain time period. This time period can vary and is evaluated by measuring the amount of water collected and by monitoring the reduction in acid number.

For descriptive purposes, a chemical representation of the polyester resin having the ester linkage formed from condensing the first intermediate compounds of the preferred embodiment is disclosed below.

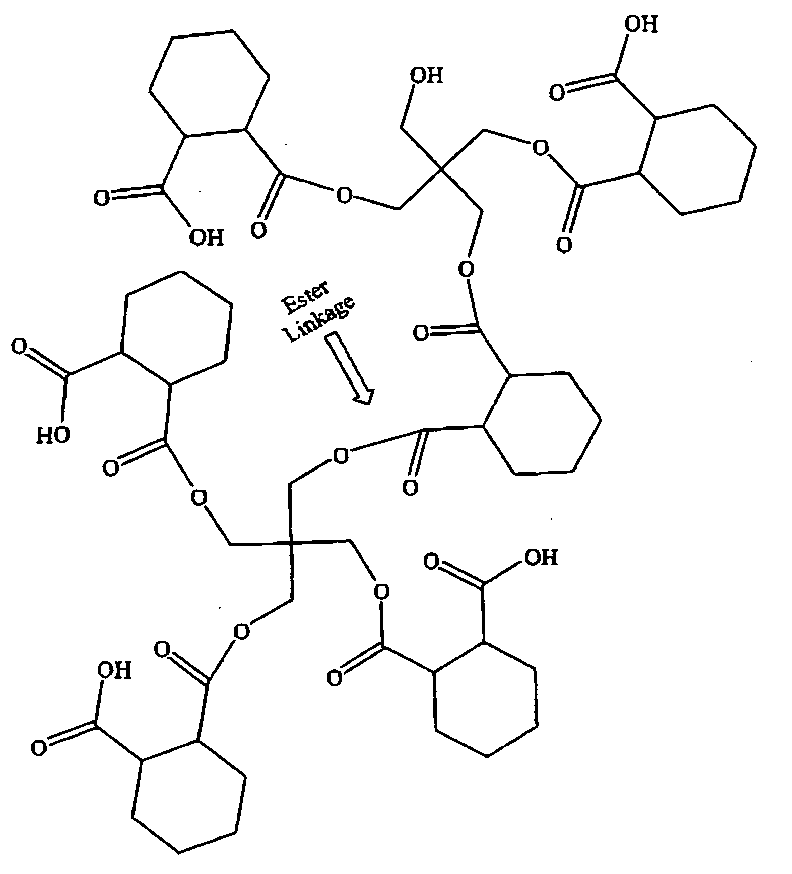

The polyester resin includes a hyper-branched organic structure that may have a wide variety of functionalities including, but not limited to, hydroxyl functionality, carboxylic acid functionality, and ester functionality.

It is to be understood that the above chemical representation for the polyester resin is but one of many possible isomers. Furthermore, the acid number (AN) of the first intermediate compounds is known prior to increasing the temperature. For example, in the preferred embodiment, it is known that the AN of the first intermediate compound is 282 mg KOH/gram. With this data, one can continue to monitor the AN through the increase in temperature and determine, i.e., estimate, approximately how much of the hydroxyl groups present in the first intermediate compound have reacted, i.e., condensed, with a carboxylic acid group of another first intermediate compound. Once again in terms of the preferred embodiment, the following date helps determine, and therefore, control how much hyper-branching is present in the final polyester resin.

| **Increase Temperature Until an AN of:** | **Appx. Amount of Hydroxyls Reacted (%)** | **Corresponding Polydispersity** | **Extent of Hyper-Branching** |
|---|---|---|---|
| 264 mg KOH/gram | 20 | 1.01-1.06 | Low |
| 250 mg KOH/gram | 30 | 1.3 | Medium |
| 243 mg KOH/gram | 40 | 1.6-3.5 | High |

Thus, to achieve the ideal polydispersity, which is described immediately below, the temperature of the first intermediate compounds is increased until the AN of 282 mg KOH/gram decreases to 264 mg KOH/gram or less.

The increased temperature, and the condensing that results from the increase in temperature, achieves a hyper-branched, polyester resin in a controlled manner.

Next, although not required, at least one of the carboxylic acid groups of the polyester resin may be reacted with the second compound having at least one epoxy group. This reaction is described additionally below. Prior to reaction with the second compound, the polyester resin with the carboxylic acid groups, i.e., the acid-functional polyester resin, can be used, without further chemical modification, in a complete coating composition. More specifically, the polyester resin in this form is a solid with a high melting point. Also, this form of the polyester resin has poor solubility in solvents, with the exception of solubility in water after neutralization. In view of the above, this form of the polyester resin is preferably used in powder coating compositions or in waterborne coating compositions. When used in such a manner, the coating composition, powder or waterborne, also incorporates a cross-linking agent, such as an epoxy-based component, for cross-linking with the carboxylic acid functionality of the polyester resin. For cross-linking in this situation, examples of suitable epoxy-based components include, but are not limited to, oligomers and polymers made from glycidyl acrylate, glycidyl methacrylate, bisphenol A monoglycidyl ether, and the like. Other cross-linking agents suitable in this situation include various poly-epoxy compounds.

Despite the ability of the carboxylic acid functional polyester resin to be incorporated into complete coating compositions, it is preferred that the polyester resin is modified with the second compound and also with the carbamate compound. This subsequent reaction takes the polyester resin and modifies it to form a second intermediate compound having at least one hydroxyl group. More specifically, it is the epoxy group of the second compound that reacts with at least one of the carboxylic acid groups of the polyester resin to form the second intermediate compound having the at least one hydroxyl group.

The second compound is selected to include at least one epoxy group, and is present in the polyester resin in an amount from 10 to 80, preferably from 25 to 60, parts by weight based on 100 parts by weight of the polyester resin after the modification with the second compound. The second compound is further selected to include from 6 to 20, preferably from 10 to 15, carbon atoms such that the compatibility and miscibility between the polyester resin, including the second compound, and a binder resin of the high solids solventborne basecoat coating composition is maximized. As such, the second compound is selected from the group of glycidylneodecanoate, dodecyl oxide, tetradecyl oxide, octadecyl oxide, cyclohexene oxide, bisphenol A monoglycidyl ether, and mixtures thereof. In view of the above characteristics of the second compound, other epoxy-containing aromatic hydrocarbons may be used as the second compound.

In the preferred embodiment of the subject invention, the second compound comprises glycidylneodecanoate. As is known in the art, glycidylneodecanoate is commercially available from Miller-Stephenson Chemical Company, Inc. under its CARDURA^{®} product line, as CARDURA E 10P. For descriptive purposes, a chemical representation of glycidylneodecanoate is disclosed below. 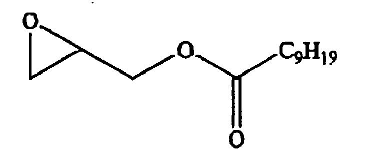 As shown above, glycidylneodecanoate includes one epoxy group. Preferably, the polyester resin is titrated for its acid content (i.e., equivalents of acid) and with the acid content determined, an equivalent amount of the second compound, which is preferably glycidylneodecanoate, would be reacted with the polyester resin so that one epoxy group reacts with each carboxylic acid group of the polyester resin.

As described above, it is the epoxy group of the second compound that reacts with at least one of the carboxylic acid groups of the polyester resin. More specifically, the epoxy ring of the glycidylneodecanoate opens such that one of the two carbon atoms, originally in the epoxy ring of the glycidylneodecanoate, reacts and bonds with the single-bonded oxygen atom from the carboxylic acid groups of the polyester resin. It is to be understood that in this reaction, the epoxy ring can open in one of two manners such that either one of the carbon atoms of the epoxy ring reacts and bonds with the single- bonded oxygen atom from the carboxylic acid group. In one manner, the second intermediate compound includes a primary hydroxyl, and in a second manner, the second intermediate compound includes a secondary hydroxyl. The two manners of epoxy ring opening are represented below. First, the primary hydroxyl groups are disclosed and then the secondary hydroxyl groups. For convenience in description, the entire second intermediate compound is not disclosed. Instead, only the carboxylic acid groups that have been modified by the second compound are included below.

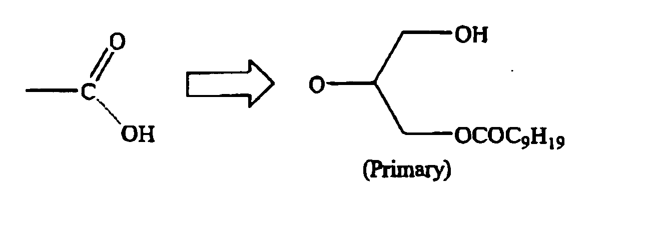

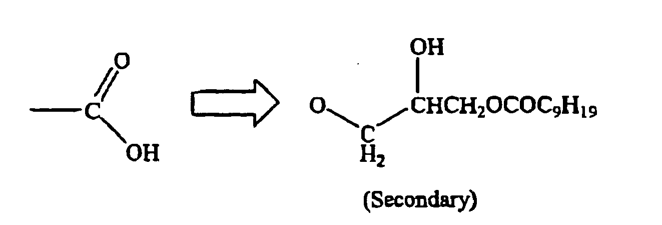

This hyper-branched polyester resin which includes the second compound as a reaction component, has a viscosity which, while higher than the polyester resin without the second compound as a reaction component, is less than what would be for a linear polyester of the same molecular weight. Furthermore, this polyester resin has a higher polydispersity ranging from 1.05-3.5, more preferably from 1.06-1.5. As understood by those skilled in the art, polydispersity is a measure of the extent of molecular-weight nonhomogeneity in a resin that indicates that there is some molecular weight distribution throughout the body of the resin. More specifically, polydispersity is the ratio of weight average molecular weight, M_{w}, to number average molecular weight, Mₙ. The weight average molecular weight, M_{w}, of the polyester resin that is the reaction product of the preferred components of one mole of pentaerythritol, three moles of HHPA, and equivalent amounts of CARDURA E 10P is from 1900 to 2100, and the number average molecular weight, Mₙ, of the polyester resin is from 1500 to 1800, which results in a polydispersity ranging from 1.06-1.4. When this preferred higher polydispersity polyester resin of the present invention is incorporated into the coating composition, it produces films that exhibit superior chip performance as compared to films produced from conventional coating compositions that are based on linear polyester resins or non-hyper-branched star polyester resins. This polyester polyol by itself, i.e., one that is not also modified by the carbamate compound, can be incorporated into complete coating compositions and cross-linked with such cross-linking agents as polyisocyanates, aminoplasts such as melamine formaldehyde resins, and the like to achieve highly desirable films.

However, it is even more preferred that at least one of the hydroxyl groups of the second intermediate compound are reacted with the carbamate compound. This reaction prepares a new, more functionalized form of the polyester resin of the subject invention. The carbamate compound is preferably defined as an alkyl carbamate having 1 to 20 carbon atoms in the alkyl chain. For example, the carbamate compound may be generically defined as

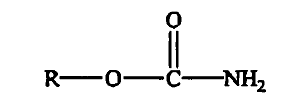

where R is an alkyl chain having from 1 to 20 carbon atoms.

In a more preferred embodiment, the carbamate compound is selected from the group of methyl carbamate, ethyl carbamate, and mixtures thereof. The most preferred carbamate compound comprises methyl carbamate [CH₃OC(O)NH₂]. Other potential carbamate compounds include, but are not limited to, butyl carbamate, propylene glycol monocarbamate, and the like.

The carbamate compound is present in the polyester resin in an amount from 1 to 30, preferably from 10 to 20, parts by weight based on 100 parts by weight of the final polyester carbamate resin. This final polyester carbamate resin is the reaction product of the first compound, the carboxylic acid anhydride, the second compound, and the carbamate compound. The molar ratio of the carbamate compound to the first compound present in the polyester resin is from 1 : 1 to 10 : 1. As indicated above, the number of hydroxyl groups in the first compound functions as a foundation for the hyper-branched organic structure of the polyester resin. As such, the total number of moles of the carbamate compound is generally equal to or less than the number of hydroxyl groups in whatever first compound that is selected. Therefore, in the preferred embodiment, the molar ratio of the carbamate compound, methyl carbamate, to the first compound, pentaerythritol, is 4 : 1 because pentacrythritol has four hydroxyl groups. If the first compound is dipentaerythritol having six hydroxyl groups, then preferably six moles of the carbamate compound are utilized to prepare the modified polyester resin. Of course, structures resulting from lower equivalents of the carbamate compound are not to be excluded. For instance, as a non-limiting example, if the first compound is dipentaerythritol, having six hydroxyl groups, and only four moles of the carbamate compound are utilized, then the modified polyester resin will have both carbamate and hydroxyl functional groups remaining.

A chemical representation of a portion of the modified polyester resin of the preferred embodiment is disclosed below showing the hydroxyl groups of the second intermediate compound carbamated. For convenience in description, the entire modified polyester resin is not disclosed. Instead, only the hydroxyl groups that have been modified by the carbamate compound are included below.

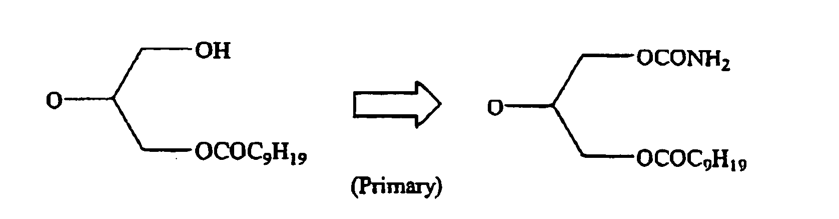

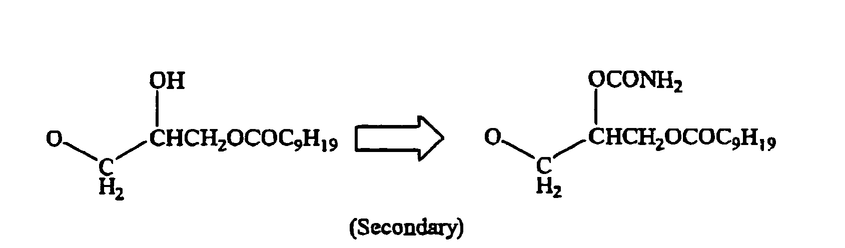

As shown above in the complete, modified polyester resin, the carbamate compound, methyl carbamate, has reacted with the primary and secondary hydroxyls of the second intermediate compound that result from the particular manner of epoxy ring opening of the glycidylneodecanoate. As such, both primary and secondary carbamate groups are present. It is to be understood that the modified polyester resin the secondary hydroxyls of the second intermediate compound can only be trans-carbamated using more rigorous preparation conditions including, but not limited to, the use of catalysts, longer preparation time, and higher preparation temperatures. Of course, in terms of the preferred embodiment, after the methyl carbamate reacts with the hydroxyl groups of the second intermediate compound to prepare the modified polyester resin, methanol is produced as a side product.

The modified polyester resin includes a hyper-branched organic structure that may have a wide variety of functionalities including, but not limited to, branched hydrocarbon functionality, hydroxyl functionality, carboxylic acid functionality, carbamate functionality, and ester functionality.

The complete coating composition of the present invention incorporates the polyester resin and a cross-linking agent that is reactive with the polyester resin. There is no requirement that the polyester resin that is incorporated into the coating composition include the second compound and the carbamate compound as reactants. Thus, if the polyester resin that is incorporated into the coating composition does not include the second compound and the carbamate compound as reactants, then the cross-linking agent must be selected so that it is reactive with the particular functionality of this polyester resin. For example, if the second compound and the carbamate compound are not reactants, then the cross-linking agent could be selected to be reactive with the carboxylic acid functionality of the polyester resin such as, for example, various poly-epoxy compounds.

On the other hand, as alluded to above, it is preferred that the modified polyester resin is incorporated into the coating composition and, for convenience in description, the subject invention is hereinafter described only in terms of this preferred embodiment where the polyester is the reaction product of a first compound having a plurality of hydroxyl groups, a carboxylic acid anhydride, a second compound having at least one epoxy group, and a carbamate compound. The polyester resin is present in the coating composition in an amount of from 10 to 95, more preferably from 50 to 95, parts by weight based on 100 parts by weight of the coating composition. For the purposes of the weight percent of the polyester resin calculation, the basis for the "coating composition" is only the amount of the resins, i.e., the polyester resin and the cross-linking agent. Any solvents, additives, and the like are not included in this calculation.

In this preferred situation, the modified polyester resin includes a wide variety of possible functionalities and the cross-linking agent can be selected accordingly. The most preferred cross-linking agent comprises an aminoplast. Preferably, the aminoplast is selected from the group of urea resins, melamine formaldehyde resins, and mixtures thereof. The most preferred cross-linking agent is melamine formaldehyde resin which, as described below, is reactive with the hydroxyl and carbamate functionality of the modified polyester resin. In any event, the cross-linking agent is present in an amount of from 5 to 50, more preferably from 5 to 20, parts by weight based on 100 parts by weight of the coating composition. For the purposes of the weight percent of the cross-linking agent calculation, the basis for the "coating composition" is only the amount of the resins, i.e., the polyester resin and the cross-linking agent. Any solvents, additives, and the like are not included in this calculation.

The melamine formaldehyde resins of the preferred embodiment include either a methylol group, CH₂OH, an alkoxymethyl group, or both. The alkoxymethyl group is of the general formula -CH₂OR₁, where R₁ is an alkyl chain having from 1 to 20 carbon atoms. As understood by those skilled in the art, the methylol groups and the alkoxymethyl groups are reactive with the carbamate functional group.

Possible cross-linking agents include, but are not limited to, monomeric and polymeric melamine formaldehyde resins, including both partially and fully alkylated melamines such as methylated melamines, butylated melamines, and methylated/butylated melamines. Other cross-linking agents that are urea resins include methylol ureas such as urea formaldehyde resins, and alkoxy ureas such as butylated urea formaldehyde resin.

The most preferred embodiment of the subject invention includes hexamethoxymethyl melamine (HMMM). HMMM is commercially available from Monsanto under its Resimene Amino Crosslinker Resins. HMMM is shown in the following chemical representations.

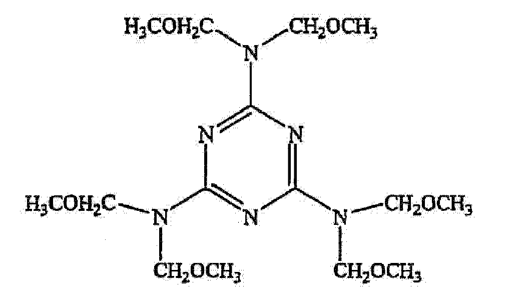

Upon application and cure of the coating composition, the alkoxymethyl groups of the HMMM, specifically the CH₂OCH₃ group, reacts with the carbamate functionality of the modified polyester resin to establish a urethane (-NH-CO-O-) linkage without use of an isocyanate. The urethane linkage between the modified polyester resin and the cross-linking agent is from the carbamate - melamine reaction and is ideal for resistance to acid etch.

A film of the coating composition can be produced. Assume, for descriptive purposes only that the polyester resin prepared by the method of the present invention is incorporated into a coating composition that is the solventborne clearcoat coating composition, and assume that this clearcoat coating composition is applied over the high solids solventborne basecoat coating composition.

Once the coating compositions are appropriately reduced to an application viscosity, the basecoat coating composition is applied to a substrate, such as the body panel of the vehicle. More specifically, the basecoat coating composition can be sprayed onto the substrate by air-atomized or bell-applied spray application, or any other equivalent processes. Once applied to the substrate, the basecoat coating composition is preferably flashed for some period of time at ambient temperature. Next, the clearcoat coating composition is applied, preferably wet-on-wet or with a slight pre-bake, to the basecoat coating composition and the two layers formed from the basecoat coating composition and from the clearcoat coating composition are simultaneously cured to form the film. Preferably, this cure takes place at an elevated temperature. At this elevated temperature, the cross-linking agent cross-links with the polyester resin to form the film. In the preferred embodiment with the modified polyester resin, the reaction between the cross-linking agent and the carbamate functionality of the polyester resin occurs at a temperature between 100°C and 175°C, and more preferably at a temperature between 110°C and 130°C from 20 to 30 minutes.

It is to be understood that all of the preceding chemical representations are merely two-dimensional chemical representations and that the structure of these chemical representations may be other than as indicated.

The following examples illustrating the preparation of the polyester resin and the complete coating composition of the subject invention, as presented herein, and are intended to illustrate and not limit the subject invention.

EXAMPLES:

The polyester resin was prepared by adding and reacting the following parts by weight, unless otherwise indicated.

**Table 1**

| | **Example 1** | | **Example 2** | |
|---|---|---|---|---|
| **Component** | **Amount (grams)** | **Amount (% by wt.)** | **Amount (grams)** | **Amount (% by wt.)** |
| First Compound | 90.0 | 8.4 | 90.2 | 8.1 |
| Carboxylic Acid Anhydride | 308.0 | 28.8 | 310.7 | 27.7 |
| Second Compound | 453.0 | 42.3 | 500 | 44.6 |
| Carbamate Compound | 220.0 | 20.5 | 220 | 19.6 |
| ***Total:*** | 1071.0 | 100 | 1120.9 | 100 |

For Examples 1-3, First Compound is pentaerythritol (PE), Carboxylic Acid Anhydride is hexahydrophthalic anhydride (HHPA), Second Compound is glycidylneodecanoate (G), and Carbamate Compound is methyl carbamate (MC).

Referring to Table 1 for Example 1, 90 grams (0.66 moles) of PE and 308 grams (2.0 moles) of HHPA were added into a reactor in a molar ratio of 1:3 to form the first intermediate compound. A nitrogen blanket was introduced in the reactor and the reactor, including the PE and HHPA, was heated with a conventional heat supply to a temperature of 125°C, then to 135°C, and an exotherm of the reaction between the PE and HHPA was realized. This exotherm was controlled at approximately 140°C. After this exotherm, the temperature of the reactor, including the first intermediate compound, was raised to approximately 160-180°C, with a considerable flow of nitrogen. Water formed due to the condensation reaction of the PE and HHPA and this water was removed azeotropically. When approximately 2.3 mL of water was collected, the AN was measured to confirm that approximately 20% of the hydroxyl groups present had condensed with the carboxylic acid groups present. The AN was 270.2 mg KOH/gram/non-volatile. As those skilled in the art would appreciate, the amount of water that is collected is a good indicator of how far the reaction has proceeded. For instance, in a load such as the load of Example 1, if 7 mL is collected, approximately 40% of the hydroxyl groups present condensed with the carboxylic acid groups present and the expected AN would be approximately 240 mg KOH/gram/non-volatile. The heating was continued and the molecular weights and polydispersity of the polyester resin prepared thus far were measured using GPC analysis with Mₙ = 950, M_{w} = 1300, and the polydispersity = 1.4 when the AN was 243.4 mg KOH/gram/non-volatile. The temperature was decreased to 140°C. After an additional 15 minutes, the molecular weights, polydispersity, and AN were measured again with Mₙ = 1180, M_{w} = 1900, the polydispersity = 1.6, and AN = 231 mg KOH/gram/non-volatile. The reaction was complete and the polyester resin was now prepared.

Next, G was added to begin preparing the modified polyester resin. More specifically, 430 grams of G were added forming the second intermediate compound. A second exotherm was realized which was controlled to be below approximately 145°C. The temperature setting was lowered to 135-140°C and the heating was continued until the AN dropped below 3 mg KOH/gram/non-volatile. If the exotherm cannot be controlled to be below 145°C due to extensive reaction between epoxy groups and hydroxy groups present in the second intermediate compound, then it may be necessary to add more G to achieve an AN below 3 mg KOH/gram/non-volatile. In Example 1, an additional 23 grams of G were added to control the exotherm and further decrease the AN as necessary. The heat supply was removed from the reactor and 89 grams of Solvesso® Aromatic Hydrocarbon 100 solvent were then added and the final AN was measured with the AN = 2.2 mg KOH/gram/non-volatile. The molecular weights and the polydispersity were also measured with Mn = 1504, Mw = 3050, and the polydispersity = 2.0. The hydroxyl number was measured to be 165 mg KOH/g/solids.

Next, 220 grams of MC (3 moles of MC) were added to the reactor. Additionally, 1.7 grams of a tin-based catalyst, specifically dibutyl tin oxide (DBTO), and 135 grams of the solvent, specifically toluene, were added along with the MC. The temperature was raised to approximately 123-128°C and the by-product, methanol, was azeotropically removed with toluene. This transcarbamation was monitored by measuring the reduction in the hydroxyl number until the hydroxyl number was 18 mg KOH/g/solids or lower resulting in an 89+% conversion of hydroxyls to carbamates. After the required level of carbamation was attained, the reactor was connected to a vacuum source and any excess MC present was removed, via vacuum stripping, along with the solvents (toluene and Solvesso® Aromatic Hydrocarbon 100 solvent). The remaining level of MC was verified by gas chromatography until the level was below 0.2% by weight of the solid polyester resin.

After stripping, the polyester resin was redissolved in propylene glycol monomethyl ether (approximately 400 grams). The complete modified polyester resin had a percent solids (or percent non-volatile) of 68.4. The final molecular weights and polydispersity were Mₙ = 1950, M_{w} = 3990, and polydispersity = 1.7. This polyester resin had an equivalent weight of 615 g/carbamate as a 70% solution and 430 g/carbamate on solids.

Referring to Table 1 for Example 2, 90.2 grams (0.66 moles) of PE and 310.7 grams (2.0 moles) of HHPA were added into a reactor in a molar ratio of 1:3 to form the first intermediate compound. A nitrogen blanket was introduced in the reactor and the reactor, including the PE and HHPA, was heated with a conventional heat supply to a temperature of 100°C for one hour and then 130°C. An exotherm of the reaction between the PE and HHPA was observed with the exotherm of the first intermediate compound peaking at approximately 154°C. After this exotherm, the AN was measured with the AN = 277.1 mg KOH/gram/non-volatile and then the temperature of the reactor, including the first intermediate compound, was raised to 180°C, with a considerable flow of nitrogen. Water formed due to the condensation reaction of the PE and HHPA, and this water was removed azeotropically. After 2.4 mL of water was collected, the AN was measured at 263.6 mg KOH/gram/non-volatile thereby indicating that about 20% of the hydroxyl groups of the PE had condensed with the carboxylic acid groups of the HHPA. The reaction was stopped by cooling to approximately 132°C.

Next, G was added to begin preparing the modified polyester resin. More specifically, the temperature was set to 140°C and 500 grams of G (2 equivalents as from the acid number measured to react with the 1.9 equivalents of acid present) were added in small portions forming the second intermediate compound. A second exotherm was realized which was controlled to be less than approximately 148°C. The temperature setting was then lowered to 135°C and this temperature was held until the AN dropped to around 3 mg KOH/gram/non-volatile. The molecular weights and the polydispersity were measured by GPC with Mₙ = 1590, M_{w} = 1920, polydispersity = 1.2. The AN was measured at 3.1 mg KOH/gram/non-volatile. The heat supply was removed from the reactor and 150 grams of Solvesso® Aromatic Hydrocarbon 100 solvent were then added to the reactor.

Next, an additional 100 grams of the solvent toluene, 220 grams of MC, and 1.7 grams of DBTO were added to the reactor. The temperature was increased to approximately 125-128°C and the by-product, methanol, was azeotropically removed with toluene. This transcarbamation was monitored by measuring the reduction in the hydroxyl number until the hydroxyl number was 20 mg KOH/g/solids or lower resulting in an 89+% conversion of hydroxyls to carbamates. The original hydroxyl number was 178.4 mg KOH/g/solids and the final hydroxyl number was 19.6 mg KOH/g/solids. After the required level of carbamation was attained, the reactor was connected to a vacuum source and any excess MC present was removed, via vacuum stripping, along with the solvents (toluene and Solvesso® Aromatic Hydrocarbon 100 solvent). The remaining level of MC was verified by gas chromatography until the level was below 0.2% by weight of the solid polyester resin.

After stripping, the polyester resin was redissolved in 400 grams of propylene glycol monomethyl ether to achieve a complete modified polyester resin having a percent solids of approximately 70. The final molecular weights and polydispersity were Mₙ = 1630, M_{w} = 2115, and polydispersity = 1.3. This polyester resin had an equivalent weight of 580 g/carbamate as a 70% solution and 402 g/carbamate on solids.

**Table 2**

| | **Example 3** | |
|---|---|---|
| **Component** | **Amount (grams)** | **Amount (% by wt.)** |
| First Compound | 136.0 | 8.3 |
| Carboxylic Acid Anhydride | 462.0 | 28.1 |
| Second Compound | 730.0 | 44.3 |
| Carbamate Compound | 318.0 | 19.3 |
| *Total:* | 1646.0 | 100 |

Referring to Table 2 for Example 3, 136.0 grams of PE and 462.0 grams of HHPA were added into a reactor in a molar ratio of 1:3 to form the first intermediate compound. 100 grams of the solvent xylene were added and a nitrogen blanket was introduced in the reactor. The reactor, including the PE and HHPA, was heated with a conventional heat supply to a temperature of 110° C and then to 125° C when a slow exotherm started. The exotherm peaked at 136° C and the temperature was increased to 150° C, with a considerable flow of nitrogen. Water formed due to the condensation reaction of the PE and HHPA and this water was removed azeotropically. After approximately 2.0 mL of water was collected, the reactor was cooled to 135° C to stop the condensation of hydroxyl with acid. The AN of this product was determined to be 272 mg KOH/gram/non-volatile which translates to 206.3 g/acid on solids. GPC showed that Mₙ = 780, M_{w} = 850, and the polydispersity of 1.1. The polyester resin was complete.

Next, G was added to begin preparing the modified polyester resin. More specifically, 730 grams of G (3.04 equivalents) were added to form the second intermediate compound. More specifically, the 730 grams of G were loaded in small lots to the reactor when the temperature was at approximately 130°C and the resulting exotherm was controlled to be below 130 - 135° C. After the exotherm, the reaction mixture was maintained at 125° C until the AN dropped below 2 mg KOH/gram/non-volatile. The Final AN and hydroxyl number were measured at 1.2 and 175 mg KOH/gram/non-volatile, respectively.

Next, an additional 300 grams of the solvent toluene, 318 grams of MC, and 2.6 grams of DBTO were added to the reactor. Additionally, 8.0 grams of triisodecylphosphite was added to serve as an anti-oxidant and to prevent yellowing. The temperature was increased to approximately 125-126°C and the by-product, methanol, was azeotropically removed with toluene. This transcarbamation was monitored by measuring the reduction in the hydroxyl number until the hydroxyl number was 20 mg KOH/g/solids or lower resulting in an 89+% conversion of hydroxyls to carbamates. The original hydroxyl number was 175 mg KOH/g/solids and the final hydroxyl number was 18.4 mg KOH/g/solids. After the required level of carbamation was attained, the reactor was connected to a vacuum source and any excess MC present was removed, via vacuum stripping, along with the solvents (toluene and xylene). The remaining level of MC was verified by gas chromatography until the level was below 0.2% by weight of the solid polyester resin.

After stripping, the polyester resin was redissolved in 200 grams of propylene glycol monomethyl ether and 200 g of 2-pentanone (also commonly referred to as MPK) to achieve a complete modified polyester resin having a percent solids of approximately 70. The final molecular weights and polydispersity were Mₙ = 1840, M_{w} = 2010, and polydispersity = 1.1. This polyester resin had an equivalent weight of 580 g/carbamate as a 70% solution and 404 g/carbamate on solids.

Next, the complete coating composition was prepared by adding and reacting the modified polyester resin in following parts by weight, unless otherwise indicated.

**Table 3**

| **Coating Composition Component** | **Example 4 (grams)** | **Example 5 (grams)** | **Example 6 (grams)** | **Comparative Example (grams)** |
|---|---|---|---|---|
| Control Polyester Resin | --- | --- | -- | 118.61 |
| Polyester Resin A | 116.22 | --- | --- | --- |
| Polyester Resin B | --- | 120.14 | --- | --- |
| Polyester Resin C | --- | --- | 99.17 | |
| Cross-Linking Agent A | 12.68 | 11.62 | --- | 13.13 |
| Cross-Linldng Agent B | --- | --- | 27.75 | -- |
| Ultra-Violet Absorber (UVA) | 3.16 | 3.16 | 3.16 | 3.16 |
| Hindered Amine Light Stabilizer (HAL) | 1.50 | 1.50 | 1.50 | 1.50 |
| Additive | 0.83 | 0.83 | 0.83 | 0.83 |
| Catalyst | 4.80 | 4.80 | 4.80 | 4.80 |
| Solvent A | 7.00 | 7.00 | 7.00 | 7.00 |
| Solvent B | 16.41 | 14.61 | 40.98 | 12.99 |
| ***Total:*** | 162.60 | 163.67 | 185.19 | 162.02 |

For Examples 4-6, and the Comparative Example:

Control Polyester Resin is a carbamate-functional star polyester resin based on 1 mole of pentaerythritol, 3.3 moles of hexahydrophthalic anhydride, and 3.3 moles of glycidylneodecanoate as reactants. Methyl carbamate is also a reactant and is used to trans the Control Polyester Resin to 90%. This Control Polyester Resin has a polydispersity of 1.07 and is primarily oligomeric because, during preparation of the Control Polyester Resin, the intermediate does not condense since the reaction temperature is controlled to not exceed 140°C;

Polyester Resin A is the hyper-branched, modified polyester resin of Example 1 prepared according to the present invention having a polydispersity of 1.7;

Polyester Resin B is the hyper-branched, modified polyester resin of Example 2 prepared according to the present invention having a polydispersity of 1.3;

Polyester Resin C is the hyper-branched, modified polyester resin of Example 3 prepared according to the present invention having a polydispersity of 1.1;

Cross-linking Agent A is a monomeric melamine formaldehyde resin commercially available from the Surface Specialties Division of UCB Chemicals of Belgium as Resimene^{®} 747;

Cross-Linking Agent B is a polymeric melamine formaldehyde resin commercially available from the Surface Specialties Division of UCB Chemicals of Belgium as Resimene^{®} BM-9539;

UVA is an ultra-violet light absorber commercially available from Ciba-Geigy as Tinuvin^{®} 384B;

HAL is a hindered amine light stabilizer commercially available from Ciba-Geigy as Tinuvin^{®} 123;

Additive is a polybutyl acrylate flow agent commercially available from Lindau Chemicals as Lindron^{®} 22;

Catalyst is a dodecylbenzene sulfonic acid blocked catalyst (25% in isopropanol) commercially available from King Industries, Inc., Norwalk, CT as Nacure^{®} 5225;

Solvent A is Solvesso® Aromatic Hydrocarbon 100 solvent (SC100); and

Solvent B is methyl propyl ketone.

After formulation of the coating compositions, the coating compositions were reduced to conventional application viscosities using conventional solvents. Example 4 had a theoretical weight percent solids (non-volatile) of 61.50 and a Brookfield viscosity for spray application of 139.8 CP at 25°C, Example 5 had a theoretical weight percent solids (non-volatile) of 61.10 and a Brookfield viscosity for spray application of 139.1 CP at 25°C, Example 6 had a theoretical weight percent solids (non-volatile) of 53.9 and a Brookfield viscosity for spray application of 112.6 CP at 25°C, and the Comparative Example had a theoretical weight percent solids (non-volatile) of 61.72 and a Brookfield viscosity for spray application of 138.5 CP at 25°C.

The complete coating compositions were applied over a basecoat and films were produced for physical property testing. More specifically, the complete coating compositions were applied over a standard black, waterborne basecoat commercially available from BASF Corporation, Southfield, MI as E54KW225. First, the basecoats were spray applied by hand (air atomized hand spray gun) to conventional 4X12" e-coated and primed panels to a film build of .6-.8 mils. The basecoat was then subjected to a heated flash for approximately 10 minutes at 140°F. After this flash, the coating compositions were applied in the same manner to a film build of 1.8-2.0 mils. The clearcoat was then flashed for approximately 10 minutes at ambient conditions. After this 10 minutes, the panels were cured to form a film. The panels were cured at 10 minutes X 180°F and then at 25 minutes X 275°F.

The physical properties of the films produced by the complete coating compositions of Examples 4-6 and the Comparative Example were evaluated. These physical properties are summarized in Table 4 below.

**Table 4**

| **Physical Property Test** | **Comparative Example** | **Example 4** | **Example 5** | **Example 6** |
|---|---|---|---|---|
| Brookfield Viscosity (25°C) | 138.5 CP | 139.8 CP | 139.1 CP | 112.6 CP |
| Wt NV | 61.72% | 61.50% | 61.10% | 53.92% |
| Wt/gal. | 8.61 lb. | 8.60 lb. | 8.58 lb. | 8.33 lb. |
| VOC | 3.30 lb/gal. | 3.31 lb./gal. | 3.34 lb./gal. | 3.84 lb./gal. |
| Multi-Repair (-20°F) / Gravelometer (chip) | Scale is 1-10 w/10 = Best | | | |
| 20 X 275°F Oven Bake | 5 | 6 | 6 | 4.5 |
| 50 X 275°F Oven Bake | 5 | 5 | 6 | 4 |
| Cockmeter, Scratch & Mar | | | | |
| Average % Gloss Retention | 94.25 | 92.63 | 93.82 | 96.75 |
| Dynamic Mechanical Thermal | 102.020 | 103.210 | 104.730 | 97.53 |
| Analysis (DMTA) | | | | |
| Tg (Tan Delta Max) | | | | |
| Cross-Link Density (moles/m³) | 164.3 | 230.1 | 202.1 | 1841.0 |
| Amtec (delta gloss loss) | 17.0 | 18.0 | --- | --- |
| Nanoindentor | Scale is 1-10 w/1 = Best | | | |
| Fracture Load | 13.52 | 16.75 | --- | 12.87 |
| Plastic Deformation | 0.35 | 0.34 | --- | 35 |
| Jacksonville Etch (14 week) | | | | |
| | 2 | 2 | 3 | --- |

## Claims

1. A method for preparing a hyper branched polyester resin, said method comprising the steps of:
(A) providing a plurality of a first compound having hydroxyl groups;
(B) reacting a plurality of a carboxylic acid anhydride with the hydroxyl groups of the first compounds to form a plurality of first intermediate compounds having at least one hydroxyl group and carboxylic acid groups; and
(C) increasing a temperature of the first intermediate compounds until the hydroxyl group of one first intermediate compound condenses with one of the carboxylic acid groups of another first intermediate compound to form the polyester resin having an ester linkage and carboxylic acid groups.

2. A method as set forth in claim 1 further comprising the step of (D) reacting at least one of the carboxylic acid groups of the polyester resin with a second compound having at least one epoxy group, to form a second intermediate compound having at least one hydroxyl group.

3. A method as set forth in claim 2 wherein the step of reacting at least one of the carboxylic acid groups of the polyester resin with the second compound having at least one epoxy group is further defined as reacting at least one of the carboxylic acid groups of the polyester resin with a second compound selected from the group of glycidylneodecanoate, dodecyl oxide, tetradecyl oxide, cyclohexene oxide, bisphenol A monoglycidyl ether, and mixtures thereof, to form the second intermediate compound having at least one hydroxyl group.

4. A method as set forth in claim 2 further comprising the step of (E) reacting the at least one hydroxyl group of the second intermediate compound with a carbamate compound.

5. A method as set forth in claim 4 wherein the step of reacting the at least one hydroxyl group of the second intermediate compound with the carbamate compound is further defined as reacting the at least one hydroxyl group of the second intermediate compound with an alkyl carbamate having from 1 to 20 carbon atoms in the alkyl chain.

6. A method as set forth in claim 1 wherein the step of providing the plurality of the first compound is further defined as providing a plurality of a first compound selected from the group of glycerol, propylene glycol, erythritol, pentaerythritol, dlpentaerythritol, trimethylolethane, trimethylolpropane, dulcitol, threitol, and mixtures thereof.

7. A method as set forth in claim 1 wherein the step of reacting the hydroxyl groups of the first compounds with the plurality of the carboxylic acid anhydride is further defined as reacting the hydroxyl groups of the first compounds with a plurality of a carboxylic acid anhydride selected from the group of maleic anhydride, hexahydrophthalic anhydride, methyl-hexahydrophthallc anhydride, tetrahydrophthalic anhydride, phthalic anhydride, succinic anhydride, dodecenylsuccinic anhydride, trimellitic anhydride, and mixtures thereof, to form the first intermediate compounds.

8. A method as set forth in claim 1 wherein the first compound is pentaerythritol and the step of reacting the hydroxyl groups of the first compounds with the plurality of the carboxylic acid anhydride is further defined as reacting one mole of the pentaerythritol with three moles of the carboxylic acid anhydride, to form the first intermediate compounds.

9. A method as set forth in claim 1 wherein the step of increasing the temperature of the first intermediate compounds is further defined as increasing a temperature of the first intermediate compounds from < 140°C to 140-190°C such that the hydroxyl group of one first intermediate compound condenses with one of the carboxylic acid groups of another first intermediate compound to form the polyester resin.

10. A method as set forth in claim 9 wherein the step of increasing the temperature of the first intermediate compounds from < 140°C to 140-190°C is further defined as increasing a temperature of the first intermediate compounds from < 140°C to 160-180°C such that the hydroxyl group of one first intermediate compound condenses with one of the carboxylic acid groups of another first intermediate compound to form the polyester resin.

11. A method as set forth in claim 1 wherein the steps of (A)-(E) are conducted at a temperature between 50°C and 200°C.

12. A coating composition comprising a cross-linking agent and a polyester resin prepared according to the method of claim 1.

13. A coating composition as set forth in claim 12 wherein said cross-llnking agent comprises an aminoplast.

14. A coating composition comprising:
a hyper branched polyester resin comprising the reaction product of:
a polyester resin prepared according to the method comprising the steps (A),(B) and (C) as described In any of claims 1 to 11;
a second compound having at least one epoxy group; and
a carbamate compound; and
a cross-linking agent reactive with said polyester resin,
wherein the polyester resin is first reacted with the second compound and the resulting intermediate having at least one hydroxyl group is reacted with the carbamate compound.

15. A coating composition as set forth in claim 14 wherein said first compound comprises pentaerythritol, said carboxylic acid anhydride comprises hexahydrophthalic anhydride, said second compound comprises glycidylneodecanoate, and said carbamate comprises methyl carbamate.

16. A coating composition as set forth In claim 14 wherein said first compound is selected from the group of glycerol, propylene glycol, erythritol, pentaerythritol, depentaerythritol, trimethylolethane, trimethylpropane, dulcitol, threitol, and mixtures thereof.

17. A coating composition as set forth In claim 14 wherein said carboxylic acid anhydride is selected from the group of maleic anhydride, hexahydrophthalic anhydride, methyl-hexahydrophthalic anhydride, tetrahydrophthalic anhydride, phthalic anhydride, succinic anhydride, dodecenylsuccinic anhydride, trimellic anhydride, and mixtures thereof.

18. A coating composition as set forth In claim 14 wherein the molar ratio of said carboxylic acid anhydride to said first compound is 2 : 1 to 20 : 1.

19. A coating composition as set forth in claim 14 wherein said second compound is selected from the group of glycidylneodecanoate, dodecyl oxide, tetradecyl oxide, octadecyl oxide, cyclohexene oxide, bisphenol A monoglycidyl ether, and mixtures thereof.

20. A coating composition as set forth In claim 14 wherein said carbamate compound comprises an alkyl carbamate having 1 to 20 carbon atoms In the alkyl chain.

21. A coating composition as set forth in claim 14 wherein said polyester resin is present in an amount of from 10 to 95 parts by weight based on 100 parts by weight of said coating composition, and said cross-linking agent Is present in an amount of from 5 to 50 parts by weight based on 100 parts by weight of said coating composition.

22. A coating composition as set forth In claim 14 wherein said polyester resin has a polydispersity of 1.05-3.5.

23. A coating composition as set forth in claim 22 wherein said polydispersity of said polyester resin is 1.06-1.5.

24. A coating composition as set forth in claim 22 wherein said polyester resin has a weight average molecule weight, M_{w'} of from 1000 to 5000.

25. A coating composition as set forth In claim 14 wherein said cross-linking agent comprises an aminoplast.

26. A coating composition as set forth In claim 25 wherein said aminoplast is selected from the group of urea resins, melamine formaldehyde resins, and mixtures therof.

## Patentansprüche

1. Verfahren zur Herstellung eines hyper-verzweigten Polyesterharzes, wobei das Verfahren die folgenden Schritte umfasst:
(A) das Bereitstellen einer Vielzahl einer ersten Verbindung mit Hydroxylgruppen;
(B) das Umsetzen einer Vielzahl eines Carbonsäureanhydrids mit den Hydroxylgruppen der ersten Verbindungen, um eine Vielzahl von ersten Zwischenverbindungen mit mindestens einer Hydroxylgruppe und Carbonsäuregruppen zu bilden; und
(C) das Erhöhen der Temperatur der ersten Zwischenverbindungen, bis die Hydroxylgruppe von einer ersten Zwischenverbindung mit einer der Carbonsäuregruppen von einer anderen ersten Zwischenverbindung kondensiert, um das Polyesterharz mit einer Esterverknüpfung und Carbonsäuregruppen zu bilden.

2. Verfahren, wie in Anspruch 1 dargelegt, welches ferner den Schritt (D) des Umsetzens von mindestens einer der Carbonsäuregruppen des Polyesterharzes mit einer zweiten Verbindung mit mindestens einer Epoxygruppe, um eine zweite Zwischenverbindung mit mindestens einer Hydroxylgruppe zu bilden,umfasst.

3. Verfahren, wie in Anspruch 2 dargelegt, wobei der Schritt des Umsetzens von mindestens einer der Carbonsäuregruppen des Polyesterharzes mit der zweiten Verbindung mit mindestens einer Epoxygruppe weiter so definiert ist, dass mindestens eine der Carbonsäuregruppen des Polyesterharzes mit einer zweiten Verbindung, die aus der Gruppe von Glycidylneodecanoat, Dodecyloxid, Tetradecyloxid, Cyclohexenoxid, Bisphenol A-monoglycidylether und Mischungen davon gewählt ist, umgesetzt wird, um die zweite Zwischenverbindung mit mindestens einer Hydroxylgruppe zu bilden.

4. Verfahren, wie in Anspruch 2 dargelegt, welches ferner den Schritt (E) des Umsetzens der mindestens einen Hydroxylgruppe der zweiten Zwischenverbindung mit einer Carbamatverbindung umfasst.

5. Verfahren, wie in Anspruch 4 dargelegt, wobei der Schritt des Umsetzens der mindestens einen Hydroxylgruppe der zweiten Zwischenverbindung mit der Carbamatverbindung weiter so definiert ist, dass die minestens eine Hydroxylgruppe der zweiten Zwischenverbindung mit einem Alkylcarbamat mit 1 bis 20 Kohlenstoffatomen in der Alkylkette umgesetzt wird.

6. Verfahren, wie in Anspruch 1 dargelegt, wobei der Schritt der Bereitstellung der Vielzahl der ersten Verbindung weiter so definiert ist, dass eine Vielzahl einer ersten Verbindung, gewählt aus der Gruppe von Glycerol, Propylenglycol, Erythritol, Pentaerythritol, Dipentaerythritol, Trimethylolethan, Trimethylolpropan, Dulcitol, Threitol und Mischungen davon gewählt ist, bereitgestellt wird.

7. Verfahren, wie in Anspruch 1 dargelegt, wobei der Schritt des Umsetzens der Hydroxylgruppen der ersten Verbindungen mit der Vielzahl des Carbonsäureanhydrids weiter so definiert ist, dass die Hydroxylgruppen der ersten Verbindungen mit einer Vielzahl von einem Carbonsäureanhydrid, gewählt aus der Gruppe von Maleinsäureanhydrid, Hexahydrophthalsäureanhydrid, Methylhexahydrophthalsäureanhydrid, Tetrahydrophthalsäureanhydrid, Phthalsäureanhydrid, Bernsteinsäureanhydrid, Dodecenylbernsteinsäureanhydrid, Trimellitsäureanhydrid und Mischungen davon, umgesetzt werden, um die ersten Zwischenverbindungen zu bilden.

8. Verfahren, wie in Anspruch 1 dargelegt, wobei die erste Verbindung Pentaerythritol ist und der Schritt des Umsetzens der Hydroxylgruppen der ersten Verbindungen mit der Vielzahl des Carbonsäureanhydrids ferner so definiert ist, dass ein Mol des Pentaerythritols mit drei Mol des Carbonsäureanhydrids umgesetzt wird, um die ersten Zwischenverbindungen zu bilden.

9. Verfahren, wie in Anspruch 1 dargelegt, wobei der Schritt der Erhöhung der Temperatur der ersten Zwischenverbindungen weiter so definiert ist, dass die Temperatur der ersten Zwischenverbindungen von < 140°C auf 140 - 190°C erhöht wird, sodass die Hydroxylgruppe von einer ersten Zwischenverbindung mit einer der Carbonsäuregruppen auf einer anderen ersten Zwischenverbindung kondensiert, um das Polyesterharz zu bilden.

10. Verfahren, wie in Anspruch 9 dargelegt, wobei der Schritt des Erhöhens der Temperatur der ersten Zwischenverbindungen von < 140°C auf 140 - 190°C weiter so definiert ist, dass die Temperatur der ersten Zwischenverbindung von < 140°C auf 150 - 180°C erhöht wird, sodass die Hydroxylgruppe einer ersten Zwischenverbindung mit einer der Carbonsäuregruppen einer anderen ersten Zwischenverbindung kondensiert, um das Polyesterharz zu bilden.

11. Verfahren, wie in Anspruch 1 dargelegt, wobei die Schritte von (A) - (E) bei einer Temperatur zwischen 50°C und 200°C durchgeführt werden.

12. Beschichtungszusammensetzung, die ein Vernetzungsmittel und ein Polyesterharz, hergestellt gemäß dem Verfahren von Anspruch 1, umfasst.

13. Beschichtungszusammensetzung, wie in Anspruch 12 dargelegt, wobei das Vernetzungsmittel ein Aminoplast umfasst.

14. Beschichtungszusammensetzung, umfassend:
ein hyper-verzweigtes Polyesterharz, umfassend das Reaktionsprodukt von folgendem:
einem Polyesterharz, welches gemäß dem Verfahren, umfassend die Schritte (A), (B), (C), wie in mindestens einem der Ansprüche 1 bis 11 beschrieben, hergestellt wird;
einer zweiten Verbindung mit mindestens einer Epoxygruppe; und
einer Carbamatverbindung; und
einem Vernetzungsmittel, das mit dem Polyesterharz reaktiv ist,
wobei das Polyesterharz zuerst mit der zweiten Verbindung umgesetzt wird und das resultierende Zwischenprodukt mit mindestens einer Hydroxylgruppe mit der Carbamatverbindung umgesetzt wird.

15. Beschichtungszusammensetzung, wie in Anspruch 14 dargelegt, wobei die erste Verbindung Pentaerythritol umfasst, das Carbonsäureanhydrid Hexahydrophthalsäureanhydrid umfasst, wie zweite Verbindung Glydicylneodecanoat umfasst und das Carbamat Methylcarbamat umfasst.

16. Beschichtungszusammensetzung, wie in Anspruch 14 dargelegt, wobei die erste Verbindung aus der Gruppe gewählt wird, die Glycerol, Propylenglycol, Erythritol, Pentaerythritol, Depentaerythritol, Trimethylolethan, Trimethylpropan, Dulcitol, Threitol und Mischungen davon umfasst.

17. Beschichtungszusammensetzung, wie in Anspruch 14 dargelegt, wobei das Carbonsäureanhydrid aus der Gruppe von Maleinsäureanhydrid, Hexahydrophthalsäureanhydrid, Methylhexahydrophthalsäureanhydrid, Tetrahydrophthalsäureanhydrid, Phthalsäureanhydrid, Bernsteinsäureanhydrid, Dodecenylbernsteinsäureanhydrid, Trimellitsäureanhydrid und Mischungen davon gewählt wird.

18. Beschichtungszusammensetzung, wie in Anspruch 14 dargelegt, wobei das Molverhältnis von dem Carbonsäureanhydrid zu der ersten Verbindung 2:1 bis 20:1 beträgt.

19. Beschichtungszusammensetzung, wie in Anspruch 14 dargelegt, wobei die zweite Verbindung aus der Gruppe von Glycidylneodecanoat, Dodecyloxid, Tetradecyloxid, Octadecyloxid, Cyclohexenoxid, Bisphenol A-monoglycidylether und Mischungen davon gewählt wird.

20. Beschichtungszusammensetzung, wie in Anspruch 14 dargelegt, wobei die Carbamatverbindung ein Alkylcarbamat mit 1 bis 20 Kohlenstoffatomen in der Alkylkette umfasst.

21. Beschichtungszusammensetzung, wie in Anspruch 14 dargelegt, wobei das Polyesterharz in einer Menge von 10 bis 95 Gewichtsteilen, basierend auf 100 Gewichtsteilen der Beschichtungszusammensetzung, vorliegt und das Vernetzungsmittel in einer Menge von 5 bis 50 Gewichtsteilen, basierend auf 100 Gewichtsteilen der Beschichtungszusammensetzung, vorliegt.

22. Beschichtungszusammensetzung, wie in Anspruch 14 dargelegt, wobei das Polyesterharz eine Polydispersität von 1,05 - 3,5 aufweist.

23. Beschichtungszusammensetzung, wie in Anspruch 22 dargelegt, wobei die Polydispersität des Polyesterharzes 1,06 - 1,5 beträgt.

24. Beschichtungszusammensetzung, wie in Anspruch 22 dargelegt, wobei das Polyesterharz ein gewichtsmittleres Molekulargewicht, M_{w}, von 1000 bis 5000 aufweist.

25. Beschichtungszusammensetzung, wie in Anspruch 14 dargelegt, wobei das Vernetzungsmittel ein Aminoplast umfasst.

26. Beschichtungszusammensetzung, wie in Anspruch 25 dargelegt, wobei der Aminoplast aus der Gruppe von Harnstoffharzen, Melaminformaldehydharzen und Mischungen davon gewählt wird.

## Revendications

1. Procédé de préparation d'une résine de polyester hyper-ramifiée, ledit procédé comprenant les étapes consistant à :
(A) procurer une pluralité d'un premier composé renfermant des groupes hydroxyle ;
(B) faire réagir une pluralité d'un anhydride d'acide carboxylique avec les groupes hydroxyle des premiers composés, en vue de former une pluralité de premiers composés intermédiaires renfermant au moins un groupe hydroxyle et des groupes acide carboxylique ; et
(C) augmenter une température des premiers composés intermédiaires jusqu'à ce que le groupe hydroxyle d'un premier composé intermédiaire se condense avec l'un des groupes acide carboxylique d'un autre premier composé intermédiaire pour former la résine de polyester renfermant une liaison ester et des groupes acide carboxylique.

2. Procédé selon la revendication 1, comprenant en outre l'étape consistant à (D) faire réagir au moins l'un des groupes acide carboxylique de la résine de polyester avec un deuxième composé renfermant au moins un groupe époxy, en vue de former un deuxième composé intermédiaire renfermant au moins un groupe hydroxyle.

3. Procédé selon la revendication 2, dans lequel l'étape de réaction d'au moins l'un des groupes acide carboxylique de la résine de polyester avec le deuxième composé renfermant au moins un groupe époxy est, en outre, définie comme la réaction d'au moins l'un des groupes acide carboxylique de la résine de polyester avec un deuxième composé choisi parmi le groupe constitué du néodécanoate de glycidyle, de l'oxyde de dodécyle, de l'oxyde de tétradécyle, de l'oxyde de cyclohexène, de l'éther monoglycidylique de bisphénol A et de leurs mélanges, en vue de former le deuxième composé intermédiaire renfermant au moins un groupe hydroxyle.

4. Procédé selon la revendication 2, comprenant, en outre, l'étape consistant à (E) faire réagir l'au moins un groupe hydroxyle du deuxième composé intermédiaire avec un composé carbamate.

5. Procédé selon la revendication 4, dans lequel l'étape de réaction de l'au moins un groupe hydroxyle du deuxième composé intermédiaire avec le composé carbamate est, en outre, définie comme la réaction de l'au moins un groupe hydroxyle du deuxième composé intermédiaire avec un carbamate d'alkyle renfermant de 1 à 20 atomes de carbone dans la chaîne alkyle.

6. Procédé selon la revendication 1, dans lequel l'étape consistant à procurer la pluralité du premier composé est, en outre, définie comme le fait de procurer une pluralité d'un premier composé choisi parmi le groupe constitué du glycérol, du propylène-glycol, de l'érythritol, du pentaérythritol, du dipentaérythritol, du triméthyloléthane, du triméthylolpropane, du dulcitol, du thréitol et de leurs mélanges.

7. Procédé selon la revendication 1, dans lequel l'étape consistant à faire réagir les groupes hydroxyle des premiers composés avec la pluralité de l'anhydride d'acide carboxylique est, en outre, définie comme la réaction des groupes hydroxyle des premiers composés avec une pluralité d'un anhydride d'acide carboxylique choisi parmi le groupe constitué de l'anhydride maléique, de l'anhydride hexahydrophtalique, de l'anhydride méthyl-hexahydrophtalique, de l'anhydride tétrahydrophtalique, de l'anhydride phtalique, de l'anhydride succinique, de l'anhydride dodécénylsuccinique, de l'anhydride trimellitique et de leurs mélanges, en vue de former les premiers composés intermédiaires.

8. Procédé selon la revendication 1, dans lequel le premier composé est le pentaérythritol et l'étape consistant à faire réagir les groupes hydroxyle des premiers composés avec la pluralité de l'anhydride d'acide carboxylique est, en outre, définie comme la réaction d'une mole du pentaérythritol avec trois moles de l'anhydride d'acide carboxylique, en vue de former les premiers composés intermédiaires.

9. Procédé selon la revendication 1, dans lequel l'étape consistant à augmenter la température des premiers composés intermédiaires est, en outre, définie comme l'augmentation d'une température des premiers composés intermédiaires de < 140 °C à 140-190 °C, de telle sorte que le groupe hydroxyle d'un premier composé intermédiaire se condense avec l'un des groupes acide carboxylique d'un autre premier composé intermédiaire, en vue de former la résine de polyester.

10. Procédé selon la revendication 9, dans lequel l'étape consistant à augmenter la température des premiers composés intermédiaires de < 140 °C à 140-190 °C est, en outre, définie comme l'augmentation d'une température des premiers composés intermédiaires de < 140 °C à 150-180 °C, de telle sorte que le groupe hydroxyle d'un premier composé intermédiaire se condense avec l'un des groupes acide carboxylique d'un autre premier composé intermédiaire, en vue de former la résine de polyester.

11. Procédé selon la revendication 1, dans lequel les étapes (A)-(E) sont réalisées à une température comprise entre 50 °C et 200 °C.

12. Composition de revêtement comprenant un agent de réticulation et une résine de polyester préparée conformément au procédé selon la revendication 1.

13. Composition de revêtement selon la revendication 12, dans laquelle ledit agent de réticulation comprend un aminoplaste.

14. Composition de revêtement comprenant :
une résine de polyester hyper-ramifiée comprenant le produit de réaction de :
- une résine de polyester préparée conformément au procédé comprenant les étapes (A), (B) et (C) tel que décrit dans l'une quelconque des revendications 1 à 11 ;
- un deuxième composé renfermant au moins un groupe époxy ;
- un composé carbamate ; et
- un agent de réticulation réactif vis-à-vis de ladite résine de polyester,
où la résine de polyester est d'abord mise à réagir avec le deuxième composé et l'intermédiaire résultant renfermant au moins un groupe hydroxyle est mis à réagir avec le composé carbamate.

15. Composition de revêtement selon la revendication 14, dans laquelle ledit premier composé comprend le pentaérythritol, ledit anhydride d'acide carboxylique comprend l'anhydride hexahydrophtalique, ledit deuxième composé comprend le néodécanoate de glycidyle, et ledit carbamate comprend le carbamate de méthyle.

16. Composition de revêtement selon la revendication 14, dans laquelle ledit premier composé est choisi parmi le groupe constitué du glycérol, du propylène-glycol, de l'érythritol, du pentaérythritol, du dipentaérythritol, du triméthyloléthane, du tri-méthylpropane, du dulcitol, du thréitol et de leurs mélanges.

17. Composition de revêtement selon la revendication 14, dans laquelle ledit anhydride d'acide carboxylique est choisi parmi le groupe constitué de l'anhydride maléique, de l'anhydride hexahydrophtalique, de l'anhydride méthyl-hexahydrophtalique, de l'anhydride tétrahydrophtalique, de l'anhydride phtalique, de l'anhydride succinique, de l'anhydride dodécénylsuccinique, de l'anhydride trimellitique et de leurs mélanges.

18. Composition de revêtement selon la revendication 14, dans laquelle le rapport molaire entre ledit anhydride d'acide carboxylique et ledit premier composé est de 2:1 à 20:1.

19. Composition de revêtement selon la revendication 14, dans laquelle ledit deuxième composé est choisi parmi le groupe constitué du néodécanoate de glycidyle, de l'oxyde de dodécyle, de l'oxyde de tétradécyle, de l'oxyde d'octadécyle, de l'oxyde de cyclohexène, de l'éther monoglycidylique de bisphénol A et de leurs mélanges.

20. Composition de revêtement selon la revendication 14, dans laquelle ledit composé carbamate comprend un carbamate d'alkyle renfermant de 1 à 20 atomes de carbone dans la chaîne alkyle.

21. Composition de revêtement selon la revendication 14, dans laquelle ladite résine de polyester est présente en une quantité de 10 à 95 parties en poids, par rapport à 100 parties en poids de ladite composition de revêtement, et ledit agent de réticulation est présent en une quantité de 5 à 50 parties en poids, par rapport à 100 parties en poids de ladite composition de revêtement.

22. Composition de revêtement selon la revendication 14, dans laquelle ladite résine de polyester présente une polydispersité de 1,05 à 3,5.

23. Composition de revêtement selon la revendication 22, dans laquelle ladite polydispersité de ladite résine de polyester est de 1,06 à 1,5.

24. Composition de revêtement selon la revendication 22, dans laquelle ladite résine de polyester présente un poids moléculaire moyen en poids, M_{w}, de 1 000 à 5 000.

25. Composition de revêtement selon la revendication 14, dans laquelle ledit agent de réticulation comprend un aminoplaste.

26. Composition de revêtement selon la revendication 25, dans laquelle ledit aminoplaste est choisi parmi le groupe constitué de résines uréiques, de résines de mélamine-formaldéhyde et de leurs mélanges.
